# NOUVEAU FASCICULE DE BREVET EUROPEEN

(11) **EP 1 186 368 B2**
(45) Date de publication et mention de la décision concernant l'opposition: **21.12.2016**
(45) Mention de la délivrance du brevet: 12.11.2008
(21) Numéro de dépôt: 01402199.2
(22) Date de dépôt: 21.08.2001
(51) Int. Cl.: B23K 9/173

(54) **Procédé de soudage MIG du nickel et des alliages de nickel avec gaz de protection à base d'argon et de CO2**
MIG-Schweissverfahren zum Schweissen von Ni und Ni-legierungen mit Ar und CO2 Schutzgas
MIG welding method for Ni and Ni-alloys with Ar and CO2 based shielding gases

(30) Priorité: 06.09.2000 FR 0011349
(43) Date de publication de la demande: 13.03.2002
(73) Titulaire: L'AIR LIQUIDE, Société Anonyme pour l'Etude et l'Exploitation des Procédés Georges Claude, 75007 Paris (FR)
(72) Inventeur: Biskup, Laurent, 28140 Gisors (FR); Marchand, Didier, 78100 St Germain en Laye (FR); Fortain, Jean-Marie, 95520 Osny (FR); Mounton, Jean-Yves, Square de l'Echiquier, 95800 Cergy Pontoise (FR)
(74) Mandataire: Debecker, Isabelle Virginie

(56) Documents cités:
- EP-A- 0 639 423
- EP-A1- 0 494 521
- EP-A1- 0 544 187
- EP-A2- 0 442 475
- EP-B1- 0 639 427
- GB-A- 2 059 846
- JP-A- H10 137 940
- US- - 4 749 841
- US-A- 4 071 732
- H. GEIPL, ING.: 'Metallschutzgas-Schweissen von Nickel-Werkstoffen' TECHNICA 1997, pages 56 - 62
- H. GEIPL ING.: 'Neue Entwicklungen beim MSG (Metallschutzgas)-Schweißen von Ni-Werkstoffen', 1997, LINDE AG, HÖLLRIEGELSKREUTH pages 3 - 14

## Description

La présente invention porte sur un procédé de soudage MIG (Metal Inert Gas) permettant de souder efficacement les alliages de nickel et mélanges gazeux particuliers destinés à un tel procédé.

En soudage MIG, la fonction première du gaz de soudage est de protéger conjointement le métal en fusion transférant dans l'arc et qui provient de la fusion de l'extrémité du fil-électrode fusible, et le bain de fusion constitué de métal déposé et métal de base. L'argon est un gaz inerte souvent utilisé dans ce but.

Cependant, pour le soudage MIG des aciers, il est connu que l'argon seul ne suffit pas à optimiser le procédé. En effet, sous argon seul, l'arc et le transfert de métal dans l'arc sont instables.

Afin de remédier à ce problème, il est classique d'ajouter à l'argon un gaz oxydant qui a pour effet de stabiliser le pied de l'arc, c'est-à-dire la tâche cathodique, puisque la légère oxydation superficielle provenant de la présence d'oxygène rend alors les matériaux à souder plus émissifs. Ainsi, on obtient un soudage plus stable et sans projections, et un cordon de soudure plus régulier.

En tant que gaz oxydant ou élément stabilisant, on peut utiliser l'oxygène ou le dioxyde de carbone, la nature et la teneur en élément stabilisant variant selon la nuance ou la composition des matériaux à souder.

Pour les aciers au carbone, par exemple, la teneur en dioxyde de carbone (CO₂) varie de quelques % à 100 % en volume, plus habituellement de 5 à 60 % en vol.

Par contre, pour les aciers inoxydables, pour lesquels il est nécessaire de limiter l'oxydation superficielle du matériau et la teneur en carbone du métal déposé, la teneur en dioxyde de carbone est généralement comprise , suivant les régimes de transfert retenus, entre 1 et 3 % vol. Toutefois, si l'élément oxydant est l'oxygène, son pouvoir oxydant étant supérieur à celui du dioxyde de carbone, la teneur ajoutée peut être inférieure à ces valeurs.

Ainsi, le document US-A-4071732 enseigne un procédé de soudage avec protection gazeuse à haute vitesse de l'acier utilisant un mélange gazeux formé d'un gaz inerte, tel l'argon, contenant moins de 30% de CO₂ ou moins de 5% de O₂.

Par ailleurs, le document EP-A-639423 porte sur un procédé de soudage à l'arc de l'aluminium et de ses alliages mettant en oeuvre un gaz de protection contenant de l'argon et/ou de l'hélium et jusqu'à 0,1% de CO₂ et/ou d'oxygène.

En outre, le document EP-A-544187 décrit un procédé de soudage à l'arc avec fil fusible des aciers fortement alliés, notamment des aciers au nickel, utilisant des mélanges gazeux contenant de 0,01 % à 0,50 % de CO₂ ou de O₂, et de l'argon et éventuellement de l'hélium pour le reste. Les mélanges préférés contiennent de 14,09 % à 50 % d'argon et de l'hélium pour le reste.

Toutefois, actuellement un problème se pose dans le cas du soudage MIG du nickel et des alliages de nickel.

Le nickel et ses alliages présentent deux caractéristiques principales qui sont à la base de leurs applications dans les domaines de la chimie, de la pétrochimie, du nucléaire, de l'aéronautique et du spatial, à savoir :
- une bonne tenue à la corrosion dans des milieux très divers. Comme pour les aciers inoxydables, c'est l'addition de chrome qui donne à l'alliage sa tenue à la corrosion, cette caractéristique qui pouvant être renforcée par la présence de chrome et de molybdène ; et
- une bonne résistance à haute température y compris en milieu oxydant.

En omettant la métallurgie du soudage et en se plaçant simplement sous l'aspect opératoire, c'est-à-dire la fusion du fil, et protection du métal en fusion, le soudage du nickel et de ses alliages présente la particularité, comparativement aux aciers inoxydables, d'une viscosité plus importante du métal en fusion due au effets du nickel et du molybdène sur les tensions superficielles du bain, ainsi qu'une plus grande difficulté pour protéger de l'oxydation le métal fondu séjournant à haute température.

Cela se traduit généralement par des cordons de soudure pouvant être bombés et irréguliers, caractéristiques d'un métal présentant une mauvaise mouillabilité et un arc instable, résultant d'une densité d'énergie trop faible et mal répartie.

Si les moyens de protection gazeuse mis en oeuvre sont insuffisants, le cordon peut également être très oxydé jusqu'à présenter une coloration noirâtre, adhérente difficile à éliminer.

Le document EP-A-639427 enseigne un procédé de soudage MIG du nickel, des aciers et de l'aluminium mettant en oeuvre des mélanges gazeux à base d'argon, d'hélium, d'hydrogène, de CO2 et/ou d'O2.

De là, le but de la présente invention est de proposer un procédé de soudage MIG du nickel et de ses alliages permettant de réaliser un joint de soudure avec un mouillage correct en surface et continu sur toute la longueur avec une oxydation superficielle très réduite.

En d'autres termes, le but de l'invention est de proposer un procédé de soudage MIG du nickel et de ses alliages mettant en oeuvre un mélange gazeux de protection assurant une plus grande stabilité d'arc ainsi qu'une plus grande densité d'énergie et un meilleur mouillage du cordon qu'habituellement obtenu par ce procédé.

En effet, d'une part, un arc plus stable et plus concentré permet d'augmenter la pénétration (profondeur) et, donc pour une épaisseur donnée, d'augmenter la vitesse de soudage et, d'autre part, en limitant très significativement l'oxydation de surface des cordons qui reste acceptable, on supprime les interventions habituellement nécessaires de meulage ou brossage en soudage multi-passes ou en parachèvement de cordon.

L'invention concerne alors un procédé de soudage MIG du nickel et des alliages de nickel, avec fil-électrode fusible et mise en oeuvre d'une protection gazeuse d'au moins une partie de la zone de soudage, dans lequel la protection gazeuse est un mélange gazeux selon la revendication 1.

Selon le cas, le procédé de l'invention peut comprendre l'une ou plusieurs des caractéristiques suivantes :
- on met en oeuvre un fil fusible plein ou fourré dont la nuance est choisie en fonction de la ou les familles d'alliages concernées, c'est-à-dire en fonction de l'alliage de nickel à souder.
- le procédé est, en fonction de la nature du fil utilisé (plein ou fourré), à régime de transfert arc court (short arc), pulsé ou pulvérisation axiale (spray).

### Exemples illustratifs de l'invention

Les inventeurs de la présente invention ont effectué un certain nombre d'essais et ont ainsi mis en évidence que certains gaz ou familles de gaz de protection habituellement dédiés au soudage des aciers inoxydables peuvent aussi convenir pour souder efficacement les alliages de nickel, bien que les propriétés de ces deux types de matériaux soient totalement différentes, à condition de limiter la teneur en élément oxydant, c'est-à-dire ici la teneur en CO₂.

Toutefois, si dans ces mêmes conditions de réalisation, l'ensemble soudé reste brut de soudage, la nature de la protection gazeuse doit être adaptée afin d'obtenir un bon compromis entre stabilité d'arc et limitation de l'oxydation de surface du cordon.

Des essais effectués, il s'est dégagé trois familles principales de mélanges gazeux utilisables pour souder les alliages de nickel, à savoir :
- les mélanges gazeux binaires d'argon et de CO₂ (hors invention) ayant une teneur en CO₂ préférentiellement supérieure à environ 0,1 % pour assurer la stabilité de l'arc et inférieure à 1 % pour limiter l'oxydation du métal déposé, de préférence inférieure à 0,3 %.
- les mélanges gazeux ternaires argon + CO₂ + hélium (hors invention), avec une teneur en CO₂ identique à des mélanges précédents et dont la teneur en hélium est comprise entre 15 à 50 % (le reste étant de l'argon), ce qui permet d'améliorer le mouillage du cordon,
- les mélanges argon + CO₂ + hydrogène (H₂) (selon l'invention) avec une teneur en CO₂ de 0,11 % et dont la teneur en hydrogène est environ 5 % (le reste étant de l'argon) de manière à améliorer encore le mouillage et qui permet, de par le caractère réducteur de l'hydrogène, de limiter l'oxydation superficielle du cordon.

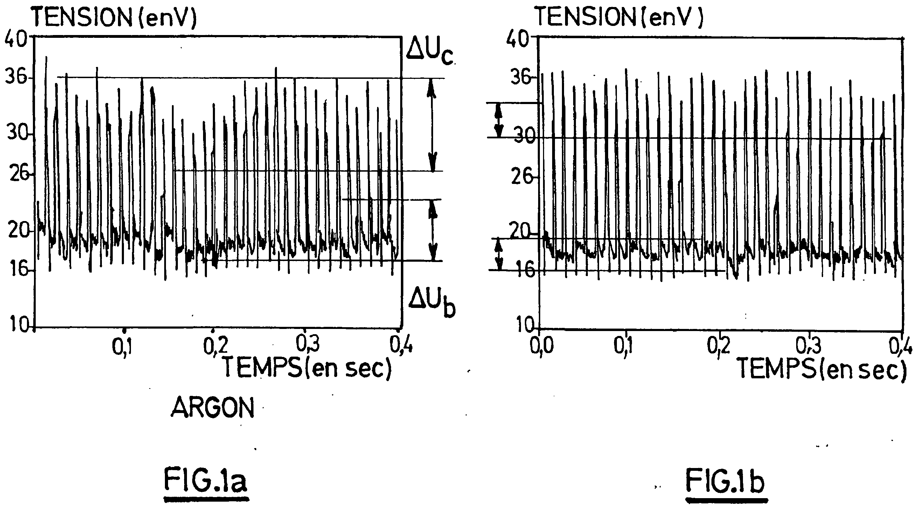

Les graphes de la tension (en volts) en fonction du temps (en secondes) obtenus en soudage MIG avec gaz protecteur constitué d'argon pur (Fig. 1a) et, à titre comparatif, avec de l'argon additionné de 0.11% de CO₂ selon l'invention (Fig. 1b) sont présentés sur les figures 1a et 1b.

Ces graphes ont été obtenus par mise en oeuvre d'un soudage MIG à courant pulsé avec dépôt en pleine tôle sur un matériau en alliage de nickel nuance 625 et avec un matériau d'apport (fil) de même nuance, pour une vitesse de soudage de 21 cm/min et une vitesse de fil de 4.5 m/min.

On voit nettement que l'addition de 0,11 % de CO₂ (fig. 1b) en régime pulsé est suffisante pour stabiliser l'arc électrique puisque l'on obtient une réduction des variations de tension en crête (ΔUc) et des variations de tension au moment du détachement (ΔUd) de la goutte de métal fondu.

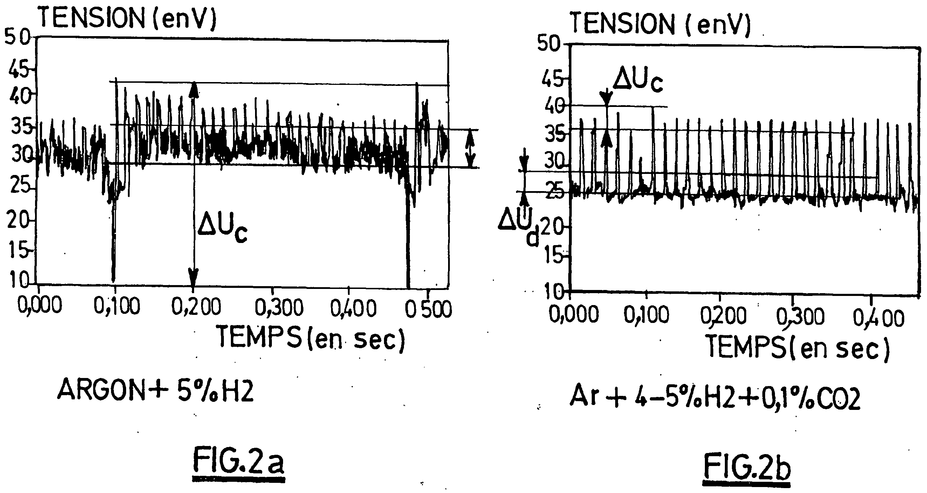

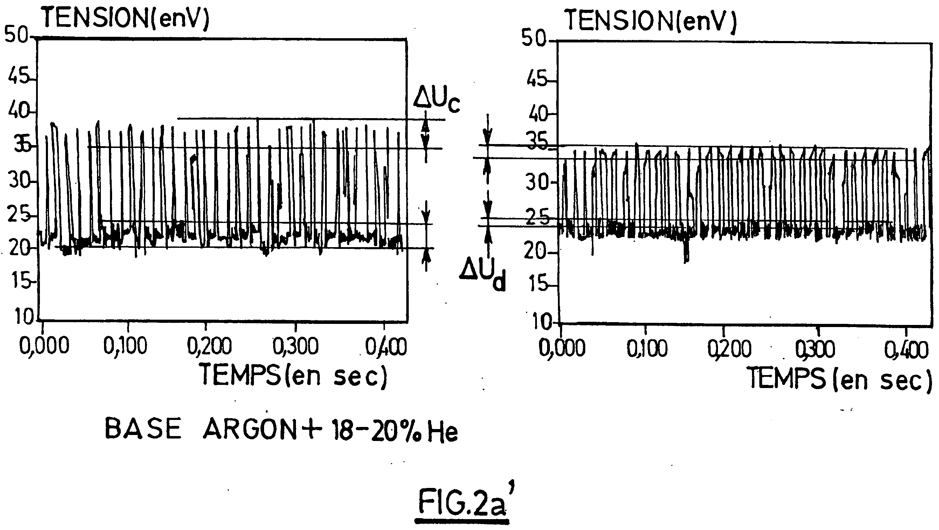

De façon analogue, il a également été constaté une influence similaire pour une addition de 0,11 % de CO₂ dans une base argon contenant environ 5% d'hydrogène (Fig. 2b) par rapport à un mélange gazeux de référence constitué uniquement d'argon et d'hydrogène dans les mêmes proportions (Fig. 2a), qui s'explique par une influence cumulée bénéfique du CO₂ à celle de l'hydrogène sur la constriction d'arc, c'est-à-dire une augmentation de la densité d'énergie, et sur la réduction de l'oxydation superficielle des cordons.

De même, des résultats similaires ont été obtenus pour une addition de 0,11 % de CO₂ dans une base argon contenant environ 18 à 20% d'hélium (Fig. 2b') par rapport à un mélange gazeux de référence constitué uniquement d'argon et d'hélium dans les mêmes proportions (Fig. 2a'),

Par ailleurs, les résultats de soudage obtenus dans les différents essais réalisés sur des plaques en alliage de nickel INCO 625 d'épaisseur 3 mm, sont donnés dans le tableau I ci-après qui montre les augmentations de vitesse de soudage et l'amélioration de la stabilité de l'arc, lors du transfert de métal, observées pour différents mélanges gazeux selon l'invention et ce, par comparaison avec de l'argon pur (indices de références 1), lorsque ces différents mélanges gazeux sont utilisés en tant que gaz de protection en procédé MIG.

**Tableau : Essais comparatifs en soudage MIG**

| | ART ANTERIEUR | HORS INVENTION | | INVENTION |
|---|---|---|---|---|
| Argon | 100 % vol. | Le reste jusqu'à 100 % en vol. | | |
| Hélium | / | / | 18 à 20 % | / |
| H₂ | / | / | / | 5 % |
| CO₂ | / | 0.11 % | 0.11 à 1 % | 0.11 % |
| Stabilité de l'arc | Mauvaise Fig. 1a | Bonne Fig. 1b | Bonne Fig. 2b' | Bonne Fig. 2b |
| Vitesse de soudage | référence | + 12 % | + 17 % | + 26 % |
| Type d'alliages de nickel | Evaluation sur INCO 625 | | | |

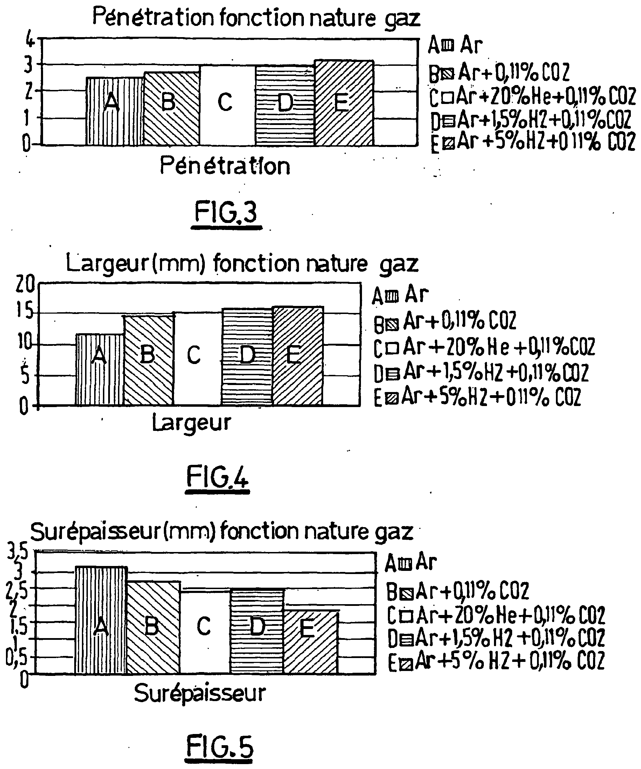

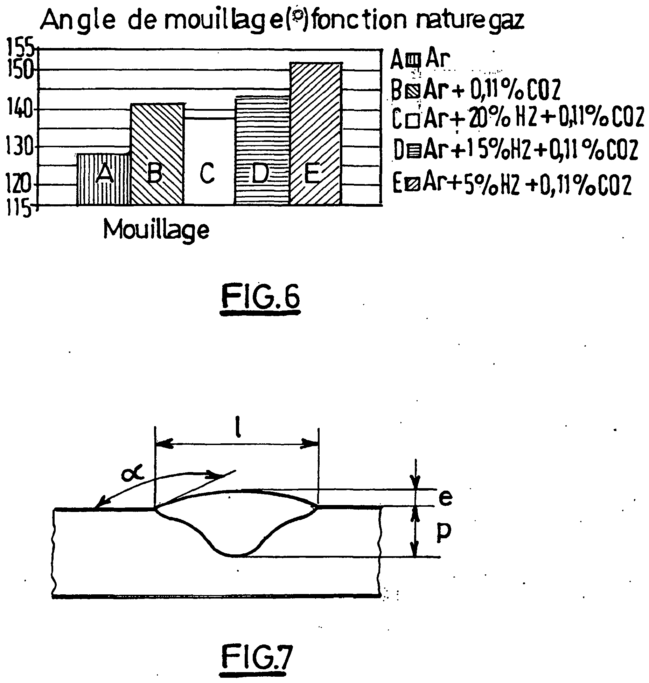

Par ailleurs, on a représenté sur les figures 3 à 6, les dimensionnements de cordons réalisés par soudage MIG en pleine tôle, dans les mêmes conditions opératoires que précédemment, en utilisant différents mélanges gazeux, à savoir de l'argon pur ou des mélanges comprenant de l'argon additionné de 0.11 % CO₂ et comprenant éventuellement, en plus, 20% d'hélium, environ 1.5% d'hydrogène ou environ 5% d'hydrogène.

Ces figures 3 à 6 illustrent la pénétration (P) de soudage obtenue (fig. 3), la largeur (I) du cordon obtenue (fig. 4), la surépaisseur (s) résultante (fig. 5) et l'angle (α) de mouillage (fig. 6) obtenus avec chacun des gaz ou mélanges gazeux testés ; ces différents paramètres de mesure et leur positionnement sont schématisés sur la figure 7.

Ces résultats démontrent clairement l'intérêt, par rapport à de l'argon pur, d'utiliser des additions gazeuses de CO₂ et d'hydrogène, d'autre part, car de telles additions conduisent :
- à une augmentation de la pénétration P,
- à une amélioration du mouillage se traduisant par une augmentation de l'étalement, c'est-à-dire une largeur (I) de cordon plus importante et une diminution de la surépaisseur (s), ainsi que par une augmentation de l'angle de mouillage.
- une réduction très sensible de l'oxydation de surface des cordons avec une addition complémentaire d'environ 5% d'hydrogène.

Ces évaluations de morphologie de cordons ont également été complétées par une caractérisation des joints soudés correspondants, à savoir compacité et caractéristiques mécaniques, notamment pour pouvoir statuer sur l'éventualité d'un endommagement des joints soudés par une solubilité excessive de l'hydrogène dans le métal fondu pouvant entraîner non seulement un taux de porosités rédhibitoire mais aussi des valeurs de résilience insuffisantes à basse température.

Les résultats comparatifs obtenus par procédé MIG selon l'invention et par procédés TIG ou plasma, sur des assemblages en alliage de nickel de types INCO 600 et 625, et présentés dans le tableau II ci-après font apparaître :
- des coefficients de joints et des valeurs intrinsèques de résilience à -196°C tout à fait comparables à ceux obtenus en procédés de soudage TIG (Tungsten Inert Gas) et plasma utilisant des gaz de protection de type Ar/H₂.
- un taux d'hydrogène total en soudage multi-passes de 8 ppm environ, qui se positionne suivant les matériaux testés, entre les 2 procédés précités, à savoir de 6 ppm en soudage plasma à 14 ppm en TIG.

**Tableau II : Comparaison des performances en soudage MIG, TIG et plasma**

| Alliage | | INCO 625 | | | INCO 600 | | |
|---|---|---|---|---|---|---|---|
| Procédé | | TIG | PLASMA | MIG | TIG | PLASMA | MIG |
| Rm métal soudé (en Mpa) | | 813 | 820 | 823 | 682 | 655 | 671 |
| Rm métal de base (en Mpa) | | 924 | | | 717 | | |
| Efficacité de jonction (Rm métal soudé / Rm métal de base) | | 0.88 | 0.89 | 0.89 | 0.95 | 0.91 | 0.93 |
| Résilience KCV (j) | + 20°C | 42 | 49 | 56 | 88 | 84.5 | 80.6 |
| | expansion latérale (en mm) | 1.4 | 1.4 | 1.2 | 1.9 | | |
| | -196°C | 38.7 | 38 | 49 | 88 | 99.3 | 83 |
| | expansion latérale (en mm) | 1.2 | 1.2 | 1.3 | 1.8 | | |
| Teneur total en hydrogène dans métal soudé (assemblage) | | | | 4 ppm | | | 4.6 ppm |
| Teneur total en hydrogène dans métal soudé (multi-couches) | | 14 ppm | 6 ppm | 7.3 ppm | 12 ppm | 6 ppm | 8 ppm |

La contamination par l'hydrogène du métal fondu n'est donc pas plus critique qu'en soudage TIG ou plasma et n'entraîne aucune dégradation significative des caractéristiques intrinsèques des assemblages.

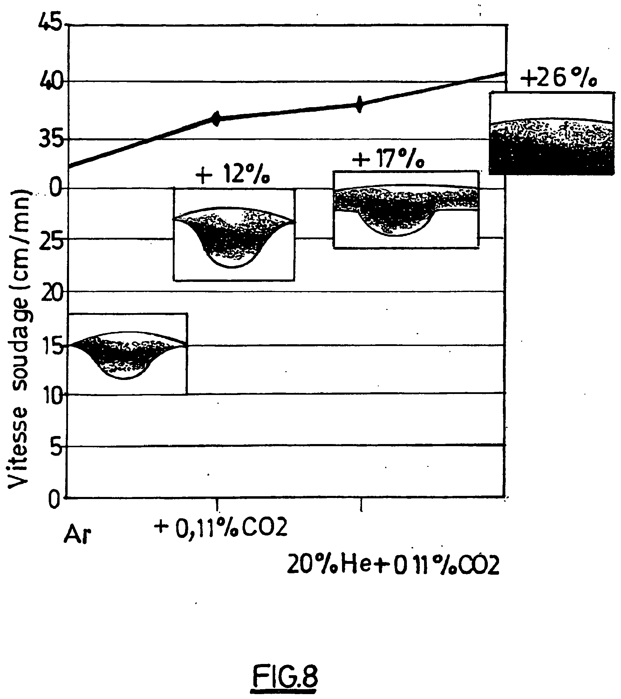

De plus, de telles additions gazeuses peuvent améliorer la productivité grâce à une augmentation de la vitesse de soudage. En effet, par rapport à de l'argon pur, pour une même pénétration ou pour une même largeur de cordon, il est possible d'augmenter considérablement la vitesse de soudage, comme montré sur la figure 8 où un mélange gazeux Ar+H₂+CO₂ conduit à un gain de vitesse de soudage pouvant atteindre environ +26%.

En outre, un examen de l'aspect de surface des cordons a confirmé l'intérêt de limiter la teneur en CO₂ pour minimiser l'oxydation superficielle, tant en soudage automatique qu' en soudage manuel.

En pratique, opérer des additions selon l'invention est donc favorable pour des opérations de soudage (liaison entre 2 ou plusieurs éléments) ou de rechargement. On limite dans les 2 cas les opérations de parachèvement après soudage et on améliore le comportement en tenue à la corrosion des assemblages sans dégrader ses propriétés mécaniques.

Des structures en nickel ou alliage de nickel soudées par le procédé MIG de l'invention sont, par exemple :
- des tuyauteries, pompes, échangeurs, appareils chaudronnés pour la chimie de la soude et des fibres synthétiques (famille des Ni pur) ;
- des colonnes, réacteurs, échangeurs de chaleur réservoirs de stockage pour la chimie de l'acide fluorhydrique, les usines de dessalement d'eau de mer, l'offshore (famille des NiCu), des réacteurs nucléaires on shore ou embarqués (famille des NiCr) ;
- des fours et collecteurs de reformage et craquage catalytique en pétrochimie (famille des NiCrFe) ;
- turboréacteurs en aéronautique et turbines à gaz (nuance NiCrFeNb) ;
- des récipients de stockage de gaz liquéfiés, fixes ou transportables, réalisés en aciers à 5.5 ou 9% Ni dont le soudage fait appel à un métal d'apport de nuances NiCr ou NiCrMo.

## Revendications

1. Procédé de soudage MIG du nickel et des alliages de nickel, avec filélectrode fusible et mise en oeuvre d'une protection gazeuse d'au moins une partie de la zone de soudage, **caractérisé en ce que** la protection gazeuse est un mélange gazeux constitué (en volume) de 0.11% de CO₂, de 5% d'hydrogène et le reste étant de l'argon.

2. Procédé selon la revendication 1, **caractérisé en ce qu'**on met en oeuvre un fil fusible plein ou fourré dont la nuance est choisie en fonction de l'alliage de nickel à souder.

3. Procédé selon l'une des revendications 1 ou 2, **caractérisé en ce que** le procédé est, en fonction de la nature du fil utilisé, à régime de transfert arc court, pulsé ou pulvérisation axiale.

## Patentansprüche

1. MIG-Schweißverfahren für Nickel und Nickellegierungen mit abschmelzender Drahtelektrode und Anwendung eines Schutzgases in mindestens einem Teil der Schweißzone, **dadurch gekennzeichnet, dass** das Schutzgas ein Gasgemisch ist, das aus 0,11 Vol.-% CO₂, aus 5 Vol.-% Wasserstoff besteht und der Rest Argon ist.

2. Verfahren nach Anspruch 1, **dadurch gekennzeichnet, dass** ein abschmelzender Volldraht oder Seelendraht angewendet wird, wobei die Sorte in Abhängigkeit von der zu schweißenden Nickellegierung ausgewählt wird.

3. Verfahren nach einem der Ansprüche 1 oder 2, **dadurch gekennzeichnet, dass** das Verfahren, in Abhängigkeit von der Art des verwendeten Drahts, Kurzlichtbogen-, Impulslichtbogen- oder Sprühlichtbogenschweißen ist.

## Claims

1. Process for the MIG welding of nickel and nickel alloys, with a consumable electrode wire and the use of a gas shield for at least part of the welding zone, **characterised in that** the gas shield is a gas mixture containing (by volume) 0.11% CO₂, 5% hydrogen and argon for the rest.

2. Process according to claim 1, **characterised in that** a solid or flux-cored meltable wire is used, the grade of which is chosen depending on the nickel alloy to be welded.

3. Process according to one of claims 1 or 2, **characterised in that** the process is carried out in short-arc, pulsed or axial spray transfer mode depending on the nature of the wire used.
